(19) Europäisches Patentamt
European Patent Office
Office européen des brevets

(11) Veröffentlichungsnummer: **0 651 525 A2**

(12) **EUROPÄISCHE PATENTANMELDUNG**

(21) Anmeldenummer: **94109446.8**

(51) Int. Cl.6: **H04J 1/04**, H04J 1/05

(22) Anmeldetag: **18.06.94**

(30) Priorität: **30.10.93 DE 4337135**

(43) Veröffentlichungstag der Anmeldung:
**03.05.95 Patentblatt 95/18**

(84) Benannte Vertragsstaaten:
**AT CH DE ES FR GB IT LI NL**

(71) Anmelder: **ANT Nachrichtentechnik GmbH**
**Gerberstrasse 33**
**D-71522 Backnang (DE)**

(72) Erfinder: **Göckler, Heinz, Dr.**
**Elbinger Strasse 52**
**D-71522 Backnang (DE)**
Erfinder: **Grotz, Karlheinz**
**Wilhelmstrasse 25**
**D-70734 Fellbach (DE)**

(54) **Drop-and-Add-Multiplexer zur Umsetzung und Aufbereitung eines Frequenzmultiplexsignals.**

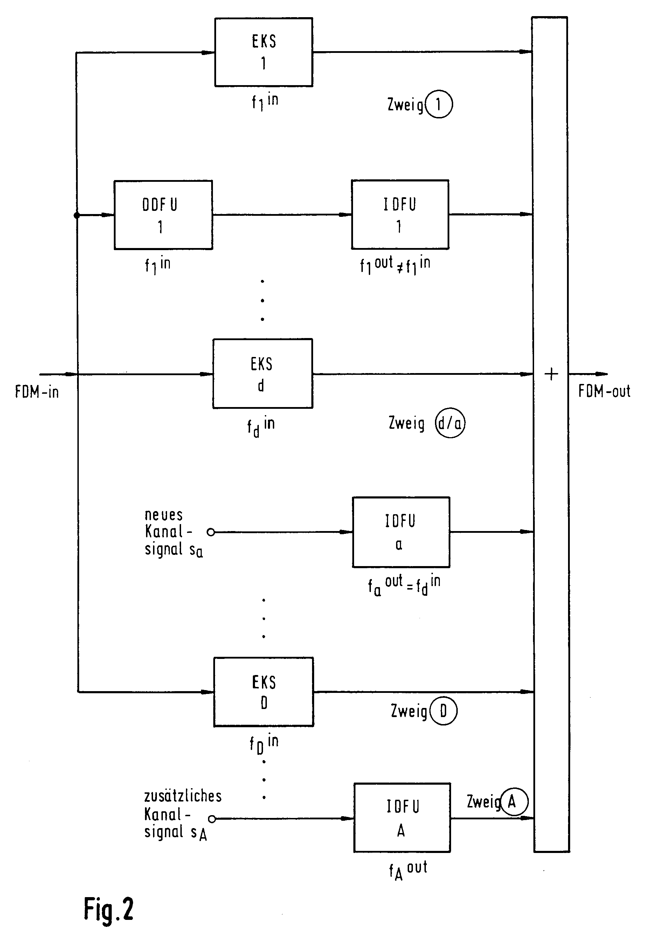

(57) Drop-and-Add-Multiplexer zur Umsetzung eines digitalen FDM-Signales mit hoher Kanalzahl und zur Aufnahme von Signalen weiterer Kanäle, dadurch gekennzeichnet, daß Einzelkanalsperren vorgesehen sind, in denen das ankommende FDM-Signal gefiltert wird, indem erwünschte Kanäle durchgelassen (bzw. frequenzumgesetzt) werden und freizuschaltende Kanalfrequenzen gesperrt werden, daß ein interpolierender Frequenzumsetzer vorgesehen ist, in dem die Signale weiterer Kanäle jeweils in den vorgesehenen Frequenzbereich umgesetzt und nach Filterung zu dem durch die Einzelkanalsperre gefilterten FDM-Signal addiert werden, und daß ein Frequenzumsetzer vorgesehen ist, in dem die Signale ankommender Kanäle in andere Frequenzlagen umgesetzt und dessen Ausgangssignal mit den Ausgangssignalen der anderen Sperren und Umsetzer zum abgehenden FDM-Signal zusammengefasst werden (Fig. 2).

Sehr modulare und unaufwendige Frequenzumsetzung mit nahezu beliebiger Kanalbelegung, Einsatz in hochkanaligen Fernseh- und Rundfunkzubringer- und Verteilnetzen.

Fig.2

Die Erfindung betrifft einen Drop-and-Add-Multiplexer zur Umsetzung eines FDM-Signales mit hoher Kanalzahl gemäß Oberbegriff des Anspruches 1. Digitale Frequenzumsetzer, welche durch Einzelkanalumsetzung in interpolierenden digitalen Frequenzumsetzern Frequenzmultiplexsignale insbesondere mit hoher Bandbreite und hoher Abtastfrequenz erzeugen, sind bekannt geworden durch die deutschen Offenlegungsschriften 40 26 477 und 40 41 632, wobei in der letzteren ein digitales Frequenzmultiplexumsetzverfahren mit Überabtastung beschrieben ist.

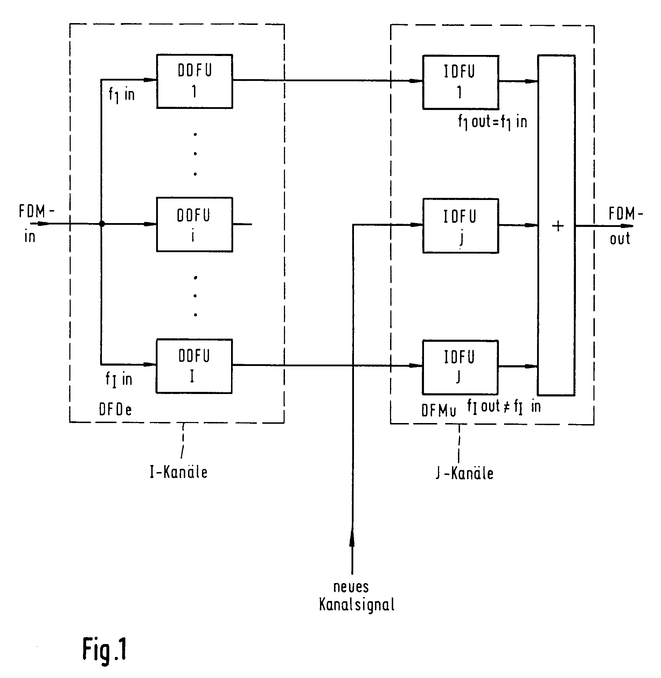

Mit den Mitteln des Standes der Technik ist es daher möglich, ein gegebenes digitales FDM-Signal mittels dezimierender digitaler Frequenzumsetzer in einem digitalen Frequenzdemultiplexer in die einzelnen Teilsignale zu zerlegen, diese Signale neu zu gruppieren bzw. einige Signale durch andere zu ersetzen, um sie anschließend mittels interpolierender digitaler Frequenzumsetzer in einem digitalen Frequenzmultiplexer zu einem neuen FDM-Signal zusammenzufassen, siehe Fig. 1. Unter der Annahme, daß im ursprünglichen FDM-in-Signal und im modifizierten FDM-out-Signal gleich viele Kanäle belegt sind (I = J), ist in Fig. 1 dargestellt, wie ein Kanalsignal, hier Kanal i durch ein anderes Kanalsignal (Kanal j) ersetzt wird. In diesem Fall kann der dezimierende digitale Frequenzumsetzer DDFUi entfallen. Die in beiden FDM-Signalen gemeinsam enthaltenen Kanalsignale können in Abhängigkeit von der Wahl der jeweiligen Umsetzerfrequenz bei unterschiedlichen Kanalfrequenzen $f_i^{in} \neq f_i^{out}$ liegen ($f_{in}$, $f_{out}$ sind die Kanalfrequenzen (Lage der Kanäle im FDA-Spektrum)). Ferner ist es möglich, daß I ≠ J ist, wobei selbstverständlich alle DDFUs für zu eliminierende Kanalsignale entfallen können.

Der vorliegenden Erfindung lag die Aufgabe zugrunde, den Aufwand für einen digitalen Drop-and-Add-Frequenzmultiplexer stark zu reduzieren. Dabei soll die freie Verfügbarkeit zur Belegung der Kanäle voll erhalten sein.

Die Lösung dieser Aufgabe erfolgt durch die Mittel des Anspruches 1. Vorteilhafte Ausgestaltungen ergeben sich durch die Unteransprüche.

Der erfindungsgemäße Drop-and-Add-Multiplexer weist die Vorteile eines wesentlich geringeren Aufwandes bei gleicher freier Verfügbarkeit der Kanalbelegung auf.

Es folgt nun die Beschreibung der Erfindung anhand der Figuren.

In der Figur 2 ist das Prinzip des erfindungsgemäßen Drop-and-Add-Frequenzmultiplexers niedergelegt.
Die Figur 3 zeigt drei Möglichkeiten für die Realisierung einer Einzelkanalsperre.
In Figur 4 ist die Realisierung der Funktion Änderung der Kanalbelegung mit weiter vermindertem und mit minimalem Aufwand gezeichnet.
In Figur 5 ist eine aufwandsminimale Struktur für die Funktion der Ersetzung eines Kanalsignals offengelegt.
Die Figur 6 schließlich zeigt eine detaillierte Schaltung für die Ersetzung eines Kanalsignals durch ein anderes bei der selben Frequenz, und in Figur 7 ist eine aufwandsgünstige Modifikation eines Teils der Figur 6 gezeichnet.

Die Grundstruktur der erfindungsgemäßen Schaltungsanordnung ist in Figur 2 dargestellt. Es sind vier Zweige herausgehoben, die unterschiedliche Funktionen wahrnehmen. In Zweig 1 wird mit einer hochselektiven Einzelkanalsperre EKS, d.h. einem breitbandigen Filter mit schmaler Ausblendlücke, aus dem ankommenden FDM-in-Signal der bei $f_1^{in}$ liegende Kanal ausgeblendet. Mit einem digitalen dezimierenden Frequenzumsetzer DDFU1 wird dieses Kanalsignal separiert und mit einem nachgeschalteten interpolierenden digitalen Frequenzumsetzer IDFU1 in einen leeren Kanal bei $f_1^{out} = f_1^{in}$ des abgehenden FDM-out-Signals eingefügt. In Zweig 1 wird demnach eine Änderung der Kanalanordnung oder Kanalbelegung bewirkt. (Drop-Add-Zweig $f^{out} \neq f^{in}$).

Im Zweig d/a wird ein Kanalsignal durch ein neues im ankommenden FDM-Signal nicht vorhandenes Kanalsignal ersetzt. Dazu wird mit einer Einkanalsperre EKSd aus dem ankommenden FDM-in-Signal das bei $f_d^{in}$ liegende Kanalsignal eliminiert. Mit einem interpolierenden digitalen Frequenzumsetzer IDFUa wird im Zweig a in eben diesen Kanal das neue Kanalsignal $s_a$ eingefügt, wobei $f_a^{out} = f_d^{in}$ gilt. (Drop-Add-Zweig $f^{out} \neq f^{in}$).

Der Zweig D bewirkt die Elimination eines Kanalsignals bei $f_D^{in}$ wie bei Zweig 1 bereits beschrieben, ohne daß dieses Signal im Ausgangssignal FDM-out-Signal erscheint und ohne daß in die entstehende Frequenzlücke ein anderes Kanalsignal eingefügt wird (Drop-Zweig).

Im Zweig A wird ein zusätzliches Kanalsignal $s_A$ in eine vorhandene Frequenzlücke eingefügt (Add-Zweig).

Bei einem digitalen Drop-and-Add-Frequenzmultiplexer ist in der Regel die Anzahl D der zu eliminierenden Kanäle klein gegen I und die Anzahl A der zu addierenden Kanäle klein gegen J der Figur 1; deshalb ist der Gesamtaufwand von Figur 2 gegenüber Figur 1 deutlich reduziert, auch wenn zunächst über den Aufwand von EKS nichts bekannt ist.

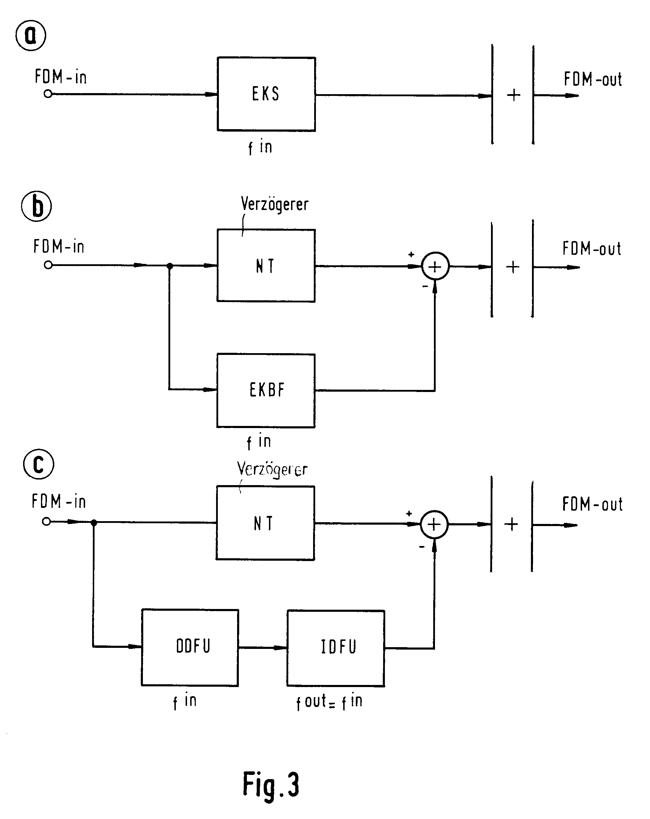

Ausgehend von der Originalstruktur der Figur 3a, welche die direkte Realisierung eines sehr breitbandigen digitalen Filters mit sehr hoher Abtastfrequenz $f_A = 1/T$ mit einer schmalen steilflankigen Sperrlücke zeigt und welche extrem aufwendig ist (Abtastratenreduktion zur Aufwandsverminderung ist nicht anwendbar), zeigen die Figuren 3b und 3c aufwandsgünstige Realisierungen einer schmalbandigen Einkanalsperre EKS unter Ausnutzung sämtlicher Möglichkeiten der digitalen Signalverarbeitung zur Minimierung des Gesamtaufwandes für einen Zweig D.

Die Lösung der Figur 3b zeigt, wie aus dem sehr breitbandigen Spektrum des eingehenden FDM-in-Signals das zu eliminierende Kanalsignal bei $f^{in}$ mit einem schmalen steilflankigen Einzelkanalbandfilter selektiert und von dem eingehenden Breitbandspektrum subtrahiert d.h. gegenphasig addiert wird. Dieser Kompensationsprozess ist genau dann auf optimale Weise möglich, wenn das Einzelkanalbandfilter eine lineare Phase (entspr. einer konstanten Gruppenlaufzeit) aufweist und wenn die Verzögerungszeit des Hauptpfades mit dem Verzögerer NT gleich der Gruppenlaufzeit des Einzelkanalbandfilters EKBF ist. Das Einzelkanalbandfilter läßt sich als nichtrekursives Filter (FIR) stets mit exakt linearer Phase realisieren. Wollte man das sehr schmalbandige Einzelkanalbandfilter (schmalbandig bezüglich $f_A$) geschlossen realisieren, so wäre der Aufwand wie bei Figur 3a hoch. Durch Anwendung der Multiratentechnik der digitalen Signalverarbeitung (Bellanger: "Digital Processing of Signals, Theory and Practice", John Wiley & Sons, New York 1989, Kapitel 10) kann der Schaltungsaufwand drastisch vermindert werden. Die Lösung zeigt Figur 3c, wobei das Einzelkanalbandfilter durch eine Kaskade eines digitalen dezimierenden Frequenzumsetzers DDFU mit einem digitalen interpolierenden Frequenzumsetzer IDFU ersetzt wird und wobei in dem DDFU die Abtastrate stufenweise herabgesetzt und im nachfolgenden IDFU transponiert dazu ebenfalls stufenweise wieder auf den ursprünglichen Wert erhöht wird.

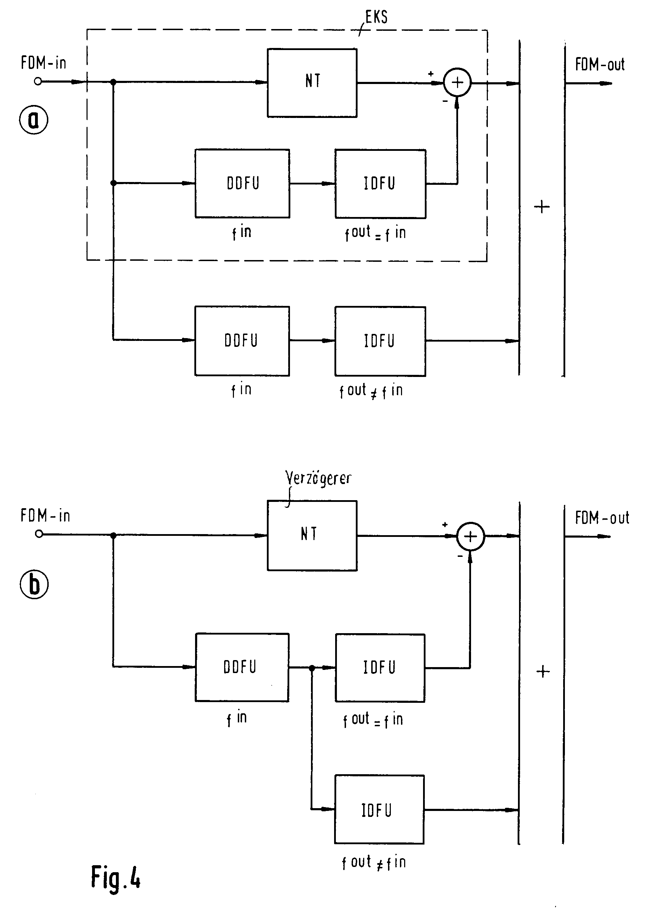

Setzt man die Struktur der Figur 3c in den Zweig 1 in Figur 2 ein, so führt das zu einer noch höheren Aufwandsverminderung bei der Änderung der Kanalanordnung. Dies ist in Figur 4a gezeigt, wobei die Blöcke DDFU jeweils identische Operationen ausführen und deshalb einer davon entfallen kann, was zu Figur 4b führt.

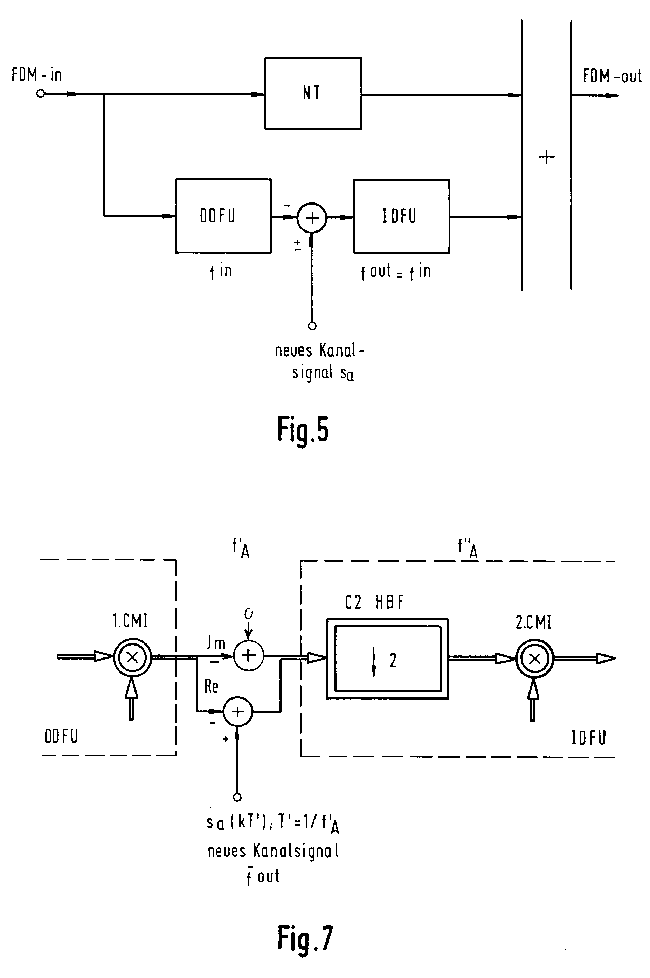

Eine ähnliche Aufwandsverminderung läßt sich auch beim Ersetzen eines Kanalsignals durch ein anderes bei der gleichen Kanalfrequenz erzielen; der Zweig Drop-Add d/a von Figur 2 erhält dann die Struktur der Figur 5.

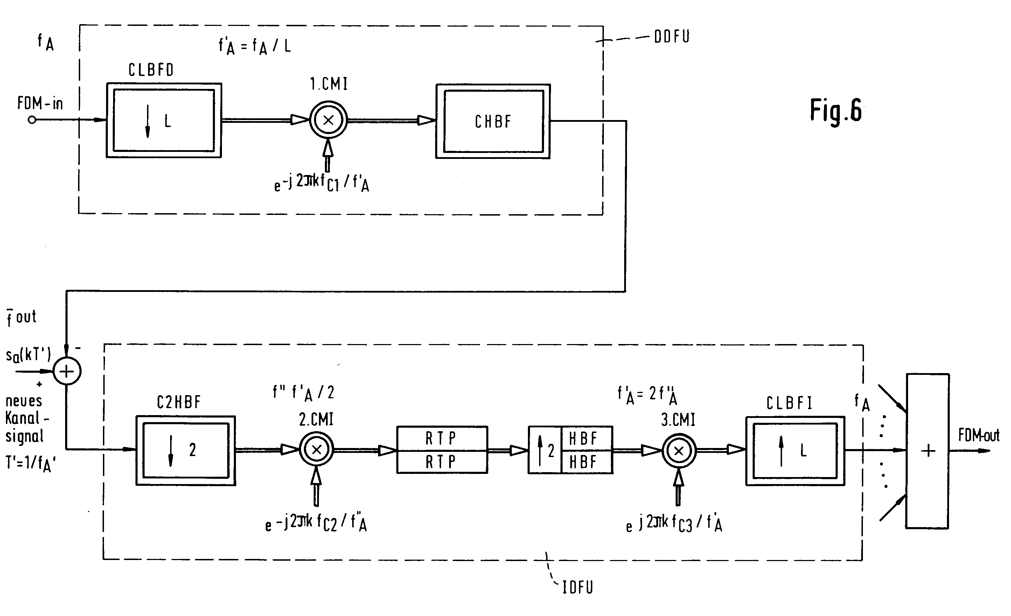

Für den unteren Zweig der Figur 5 ist in Figur 6 eine aufwandsvermindernde Realisierung z.B. für einen TV-DADFMu angegeben. Hierbei wird das reelle (oder auch komplexe) FDM-in-Signal mittels eines Dezimationsfilters CLBFD mit komplexen Koeffizienten in ein komplexwertiges Signal überführt bei gleichzeitiger Verminderung der Abtastfrequenz um den Faktor L: $f_A = f_A/L$. Mit Hilfe eines nachfolgenden ersten komplexen Mischers 1. CMI wird das zu eliminierende Signal der Frequenz $f^{in}$ in die Frequenzlage $\bar{f}^{out}$ des neu einzuspeisenden Kanalsignals gebracht ($\bar{f}^{out}$ ist bezogen auf die Abtastfrequenz $f'_A$, mit der das neue Kanalsignal eingespeist wird). Mit dem nachgeschalteten aufwandsgünstigen Halbbandfilter mit komplexem Koeffizienten CHBF wird das komplexwertige zu eliminierende Kanalsignal wieder in ein reellwertiges Signal überführt (zu CHBF-Realisierung siehe deutsche Patentschrift 37 05 207). Das DDFU-Ausgangssignal, welches noch mit den beiden unmittelbar benachbarten Kanalsignalen belegt sein kann, wird von dem neu einzuspeisenden Kanalsignal subtrahiert, wobei das neu zu addierende Signal ebenso wie das zu eliminierende Signal mindestens um den Faktor 2 überabgetastet ist, also $f_A$ größer 4B mit der Bandbreite B. Damit kann das reellwertige Differenzsignal mit einem aufwandsgünstigen Halbbandfilter C2HBF mit komplexen Koeffizienten und breiten Übergangsbereichen zwischen Durchlaß- und Sperrbereich wieder in ein komplexwertiges Signal überführt werden, wobei gleichzeitig die Überabtastfrequenz auf $f''_A = f'_A/2$ halbiert wird (C2HBF ist beschrieben in der Patentschrift DE 36 21 737). Der nachfolgende zweite komplexe Mischer 2. CMI verschiebt das komplexwertige Differenzsignal in eine Frequenzlage $\bar{f}^{out} = 0$, oder $\pm f''_A/4$, bei der die beiden nachfolgenden Filterpaare RTP und HBF aufwandsminimal realisierbar sind. In Figur 6 wurde $\bar{f}^{out} = 0$ angenommen, entsprechend ist dann $f_{c2} = \bar{f}^{out}$. RTP ist das eigentliche steilflankige Bandbegrenzungsfilter, das die Nachbarkanalbefreiung bzw. Selektion bzw. Unterdrückung bewirkt. Es ist der aufwendigste Filterblock; da es aber bei der niedrigstmöglichen Abtastfrequenz $f''_A$ betrieben wird, ist es aufwandsminimal. In vielen Fällen kann es auch als Halbbandfilter realisiert werden. Wegen $f^{out} = 0$ hat RTP reelle Koeffizienten und ist realisiert als ein Paar identischer Filter. Das gleiche gilt für das nachfolgende Filterpaar zur Verdopplung der Abtastfrequenz auf $f'_A = 2 f''_A$. Dieses Filter ist stets als Halbbandfilter HBF realisierbar. Der nachfolgende dritte komplexe Mischer 3. CMI verschiebt das Differenzsignal, das nach RTP nur Spektralanteile in dem betrachteten Kanal der Breite B enthält, in die gewünschte Frequenzlage $f^{out} = f^{in}$ mit $\bar{f}^{out} = 0$ gilt $fc3 = f^{out}$. Schließlich erhöht das anschließende ausgangsseitige Interpolationsfilter CLBFI mit komplexem Koeffizienten die Abtastfrequenz um den Faktor L auf den ursprünglichen Wert $f_A$. Die Filter CLBFD und CLBFI können auch als Kaskade von Teilfiltern realisiert werden, welche die Abtastrate jeweils um einen Teilfaktor von L verändern. Das Eingangssignal FDM-in kann auch komplexwertig eingespeist werden, wenn das höherkanalige FDM-Signal zuvor noch in Gruppen umgesetzt worden ist. In entsprechender Weise kann auch das Ausgangssignal FDM-out ebenfalls komplexwertig sein.

Die verwendeten Filter müssen zumindest in den Teilsystemen, die zur Elimination von Kanalsignalen (Drop-Funktion) beitragen, mindestens näherungsweise eine lineare Phase (=konstante, frequenzunabhängige Gruppenlaufzeit) aufweisen. Dies wird vorzugsweise erreicht durch die Verwendung nichtrekursiver (FIR) Filter mit linearer Phase (symm. Impulsantwort). Es können aber auch rekursive (IIR) Filter mit geebneter Laufzeit (z.B. mit Allpässen) zum Einsatz kommen.

Eine geringe Aufwandsverminderung gegenüber der Realisierung nach Figur 6 läßt sich durch eine Anordnung gemäß Figur 7 erzielen. Die Filter zwischen ersten und zweiten komplexen Mischer nämlich CHBF und C2HBF haben dieselbe Filterlänge d.h. die gleiche Koeffizientenzahl, arbeiten aber bei unterschiedlichen Abtastraten. In der Lösung nach Figur 7 wurde das Filter CHBF in das nachfolgende Filter integriert, wobei der Aufwand von C2HBF, das nun mit komplexem Signal gespeist wird, zwar verdoppelt wird, aber der Gesamtaufwand sich um den Faktor 1/3 vermindert. Das neue Kanalsignal $s_a$ kann wahlweise mit dem Realteil (Fig. 7) oder dem Imaginärteil des komplexen Ausgangssignals des ersten komplexen Mischers (1. CMI) zusammengefaßt werden.

Der Aufwand für die Änderung der Kanalbelegung gemäß Figur 4b läßt sich nochmals vermindern, in dem man den einen IDFU einspart und dafür den verbleibenden IDFU gemäß Figur 6 realisiert mit der Modifikation, daß der dritte komplexe Mischer CMI und das ausgangsseitige CLBFI Filter doppelt vorgesehen werden und zwar einmal mit der Mischfrequenz $f_{c3} = f^{out} = f^{in}$ für den Zweig zur Differenzbildung / Kompensation und zum andern mit der Mischfrequenz $f_{c3} \neq f^{in} \neq f^{out} = f_{c3}$ für den unteren Zweig mit der Belegung der neuen Frequenzlage, wobei $\bar{f}^{out} = 0$ vorausgesetzt aber nicht zwingend notwendig ist.

**Patentansprüche**

1. Drop-and-Add-Multiplexer zur Umsetzung eines FDM-Signales mit hoher Kanalzahl und zur Aufnahme von Signalen weiterer Kanäle, dadurch gekennzeichnet, daß Einzelkanalsperren (EKS) vorgesehen sind, in denen das ankommende FDM-Signal gefiltert wird, indem erwünschte Kanäle durchgelassen (bzw. frequenzumgesetzt) werden, freizuhaltende ($f_1^{in}$) bzw. freizuschaltende Kanalfrequenzen ($f_D^{in}$, $f_d^{in}$) gesperrt (EKS) werden,
daß ein interpolierender digitaler Frequenzumsetzer (IDFU) vorgesehen ist, in dem die Signale weiterer neuer oder zusätzlicher Kanäle ($s_a$, $s_A$) jeweils in den vorgesehenen freien Frequenzbereich ($f_1^{out} \neq f_1^{in}$, $f_a^{out} = f_d^{in}$, $f_A^{out}$) umgesetzt (IDFU) und nach Filterung zu dem durch die Einzelkanalsperre (EKS) gefilterten, ankommenden FDM-Signal addiert werden und daß ein digitaler Frequenzumsetzer vorgesehen ist, der aus einer Kaskade von einem digitalen dezimierenden und einem. digitalen interpolierenden Frequenzumsetzer (DDFU, IDFU) besteht und in dem die Signale ankommender, umzusetzender Kanalfrequenzen von der Frequenzlage $f_1^{in}$ in die Frequenzlage $f_1^{out} \neq f_1^{in}$ umgesetzt werden und dessen Ausgangssignal mit den Ausgangssignalen der anderen Sperren und Umsetzer mittels eines Addierers zum neuen abgehenden (abzusendenden) FDM-Signal zusammengefasst wird (Fig. 2).

2. Drop-and-Add-Multiplexer (DAMUX) nach Anspruch 1, dadurch gekennzeichnet, daß die Einzelkanalsperre (EKS) zwei Pfade aufweist, deren Ausgangssignale summiert werden,
daß im ersten Pfad das FDM-in-Eingangssignal durchgeschaltet wird,
daß der zweite Pfad ein Einzelkanalbandfilter (EKBF) und einen Vorzeicheninverter aufweist (Fig. 3b).

3. DAMUX nach Anspruch 2, dadurch gekennzeichnet, daß zur Kompensation der Laufzeit des Einzelkanalbandfilters (EKBF) im zweiten Pfad das ankommende FDM-in-Signal im ersten Pfad um die gleiche Laufzeit verzögert wird (Fig. 3b).

4. DAMUX nach einem der vorhergehenden Ansprüche, dadurch gekennzeichnet, daß das Einzelkanalbandfilter (EKBF) aus einer Kaskade eines digitalen dezimierenden Frequenzumsetzers und eines interpolierenden digitalen Frequenzumsetzers (DDFU und IDFU) besteht (Fig. 3c).

5. DAMUX nach Anspruch 2 bis 4, dadurch gekennzeichnet, daß zur Änderung der Kanalbelegung in der Einzelkanalsperre (EKS) und im digitalen Frequenzumsetzer (DFU) nur ein einziger digitaler dezimierender Frequenzumsetzer (DDFU) vorgesehen ist, dessen Ausgangssignal sowohl dem interpolierenden digitalen Frequenzumsetzer (IDFU) der Einzelkanalsperre (EKS) als auch dem interpolierenden digitalen Frequenzumsetzer (IDFU) zur Umsetzung des Kanals von der Frequenz $f^{in}$ in die Frequenz
$f^{out} = f^{in}$ als Eingangssignal dient (Fig. 4b für Zweig 1 der Fig. 2).

6. DAMUX nach Anspruch 2 bis 4, dadurch gekennzeichnet, daß zur Ersetzung eines Kanals durch einen anderen bei der selben Frequenz $f_d^{in}$ ein einziger interpolierender digitaler Frequenzumsetzer (IDFU) vorgesehen ist, in den das Signal $s_a$ des neuen Kanals mit positivem oder negativem Vorzeichen und das Ausgangssignal des vorgeschalteten dezimierenden digitalen Frequenzumsetzers (DDFU) mit negativem Vorzeichen bzw. in einer Phasenlage eingespeist wird, so daß das zu ersetzende Kanalsignal im FDM-out-Signal eliminiert ist, (Fig. 5).

7.  DAMUX nach einem der Ansprüche 4 bis 6, dadurch gekennzeichnet, daß der digitale dezimierende Frequenzumsetzer (DDFU) aus einer Kaskade eines komplexen dezimierenden Bandfilters (CLBFD), einem ersten komplexen Mischer (1.CMI) und einem komplexen Halbbandfilter (CHBF) besteht mit dem Eingangssignal FDM-in und dem Ausgangssignal bei der verschobenen Kanalmittenfrequenz $\bar{f}^{out}$ (Fig. 6).

8.  DAMUX nach einem der Ansprüche 4 bis 6, dadurch gekennzeichnet, daß der interpolierende digitale Frequenzumsetzer (IDFU) aus einer Kaskade eines komplexen dezimierenden Halbbandfilters (C2HBF), einem zweiten komplexen Mischer (2.CMI), einem reellen Filterpaar (RTP), einem interpolierenden Halbbandfilterpaar (HBF), einem dritten komplexen Mischer (3.CMI) und einem interpolierenden komplexen Bandfilter (CLBFI) besteht (Fig. 6).

9.  DAMUX nach Anspruch 7 und 8, dadurch gekennzeichnet, daß bei der Kaskade des dezimierenden digitalen Frequenzumsetzers (DDFU) und dem interpolierenden digitalen Frequenzumsetzer (IDFU) die Funktion des komplexen Halbbandfilters (CHBF) in das komplexe dezimierende Halbbandfilter (C2HBF) integriert ist und daß das neue Kanalsignal $s_a$ mit dem Realteil oder dem Imaginärteil des komplexen Ausgangssignals des ersten komplexen Mischers (1. CMI) zusammengefaßt wird (Fig. 7).

10.  DAMUX nach Anspruch 5, 7 und 8, dadurch gekennzeichnet, daß anstelle der beiden interpolierenden digitalen Frequenzumsetzer (IDFU), welche zur Sperrung in der Einzelkanalsperre (EKS) bzw. zur Umsetzung vorgesehen sind, ein einziger interpolierender digitaler Frequenzumsetzer (IDFU) vorgesehen ist, welcher am Ausgang des Halbbandfilterpaares (HBF) einen zweiten Zweig mit einem weiteren dritten komplexen Mischer und einem danachfolgenden weiteren komplexen interpolierenden Bandfilter (CLBFI) mit $f_{C3} = f^{out} = f^{in}$ zur

Differenzbildung bzw. Kompensation (entspr. Fig. 4b mittlerer Zweig) enthält, und daß im ersten Zweig mit $f^{out} = f_{C3} \neq f^{in}$ gemischt wird.

Fig.1

| | | |
|---|---|---|
| EKS 1 | | |

$f_1{}^{in}$

Zweig ①

DDFU 1

$f_1{}^{in}$

IDFU 1

$f_1{}^{out} \neq f_1{}^{in}$

EKS d

FDM-in

$f_d{}^{in}$

Zweig ⓓ/ⓐ

+ FDM-out

neues Kanal- signal $s_a$

IDFU a

$f_a{}^{out} = f_d{}^{in}$

EKS D

$f_D{}^{in}$

Zweig ⓓ

zusätzliches Kanal- signal $s_A$

IDFU A

Zweig Ⓐ

$f_A{}^{out}$

# Fig.2

**Fig.3**

EKS

FDM-in

NT

+

FDM-out

a

DDFU
f in

IDFU
f out = f in

+

DDFU
f in

IDFU
f out ≠ f in

Verzögerer

FDM-in

NT

+

FDM-out

b

DDFU
f in

IDFU
f out = f in

+

IDFU
f out ≠ f in

Fig.4

**Fig.5**

**Fig.7**

## Fig.6